(19)

Europäisches
Patentamt
European
Patent Office
Office européen
des brevets

(11) **EP 2 337 237 A1**

(12) **EUROPEAN PATENT APPLICATION**

(43) Date of publication:
**22.06.2011 Bulletin 2011/25**

(51) Int Cl.:
**H04B 7/155** *(2006.01)*

(21) Application number: **10194595.4**

(22) Date of filing: **10.12.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **18.12.2009 KR 20090127373**<br>**12.05.2010 KR 20100044609**<br><br>(71) Applicants:<br>• **Electronics and Telecommunications Research Institute**<br>**Daejeon 305-700 (KR)**<br>• **Cheju National University Industry-Academic Cooperation Foundation**<br>**Jeju 690-756 (KR)**<br><br>(72) Inventors:<br>• **Park, So Ra**<br>**Daejeon (KR)** | • **Ko, Seok Jun**<br>**Jeju-do (KR)**<br>• **Baek, Myung Sun**<br>**Seoul (KR)**<br>• **Kim, Geon**<br>**Daejeon (KR)**<br>• **Lee, Yong Hoon**<br>**Daejeon (KR)**<br>• **Kim, Jin Min**<br>**Seoul (KR)**<br>• **Lee, Yong Tae**<br>**Daejeon (KR)**<br>• **Song, Yun Jeong**<br>**Daejeon (KR)**<br>• **Lee, Soo In**<br>**Daejeon (KR)**<br><br>(74) Representative: **Betten & Resch**<br>**Patentanwälte**<br>**Theatinerstrasse 8**<br>**80333 München (DE)** |

(54) **Transmitter, transmitting method, repeater and repeating method**

(57) The present invention relates to a transmitter, a repeater; a transmitting method, and a repeating method. A transmitter according to an exemplary embodiment of the present invention includes, a first signal generator that generates conventional signals according to a first wireless communication scheme; a second signal generator that generates additional signals used in a second wireless communication scheme different from the first wireless communication scheme; a coupler that couples the additional signals to the convention signals; and a transmitting unit that transmits the coupled signals in a transmission band of the first wireless communication scheme.

FIG. 1

**Description**

BACKGROUND OF THE INVENTION

1. Field of the Invention

The present invention relates to a transmitter, a repeater, a transmitting method, and a repeating method, and more particularly, to a transmitter, a repeater, a transmitting method, and a repeating method that adds additional signals to a wireless communication system and transmits or repeats them,

2. Description of the Related Art

A commercialized wireless communication system according to the related art has used one appointed transmission method for a predetermined purpose. For example, the wireless communication system according to the known CDFIA scheme performs CDMA modulation on conventional signals and transmits them in the CDMA frequency band, The wireless communication system according to an OFDM scheme performs OFDM modulation on the conventional signals and transmits them in an OFDM frequency band.
In other words, the wireless communication system according to the related art modulates and transmits and receives the conventional signals according to a specific wireless communication scheme.

SUMMARY OF THE INVENTION

It is an object of the present invention to provide a transmitter, a transmitting method, a repeater, and a repeating method that adds signals of a second wireless communication scheme different from a first wireless communication scheme and transmits them by the first wireless communication scheme.
An exemplary embodiment of the present invention provides a transmitter, including: a first signal generator that generates conventional signals according to a first wireless communication scheme; a second signal generator that generates additional signals used in a second wireless communication scheme different from the first wireless communication scheme; a coupler that couples the additional signals to the conventional signals; and a transmitting unit that transmits the coupled signals in a transmission band of the first wireless communication scheme,
**[0006]** Another embodiment of the present invention provides a repeater repeating conventional signals transmitted by a first wireless communication scheme, including: a receiving unit that receives the conventional signals and feedback signals feedback according to the repetition of the conventional signals; an extractor that extracts additional signals used in a second wireless communication scheme different from the first wireless communication scheme from the feedback signals; a signal processor that processes signals received by the receiving unit by using the additional signals; and a transmitting unit that repeats the processed signals.
Yet another embodiment of the present invention provides a transmitting method, including: generating conventional signals according to a first wireless communication scheme; generating additional signals used in a second wireless communication scheme different from the first wireless communication scheme; coupling the additional signals to the conventional signals; and transmitting the coupled signal in the transmission band of the first wireless communication scheme, wherein the additional signal is used to detect wireless channel environments transmitting the coupled signals.
Yet another embodiment of the present invention provides a repeating method repeating conventional signals transmitted by a first wireless communication scheme, including: receiving conventional signals and feedback signals fedback according to the repetition of the conventional signals; extracting additional signals used in a second wireless communication scheme different from the first wireless communication scheme from the feedback signals; detecting wireless channel environments repeating the conventional signals by using the additional signals and processing signals received by the receiving unit by using the detected result; and repeating the processed signals.
According to an embodiments of the present invention, it can increase the use efficiency of the frequency band by coupling the additional signals used in the second wireless communication scheme to one radio band used in the first wireless communication scheme without adding a separate band and using the additional signal in various purposes.

BRIEF DESCRIPTION OF THE DRAWINGS

FIG. 1 is a block diagram showing a transmitter according to exemplary embodiments of the present invention and a receiver corresponding to the transmitter;

FIG. 2 is an exemplified frequency spectrum of a signal transmitted by the transmitter of FIG. 1;
FIG. 3 is a block diagram illustrating a configuration of the transmitter according to an exemplary embodiment of the present invention;
FIG. 4 is an exemplified block diagram of a PN sequence generator of FIG. 3;
FIG. 5 is an exemplary conceptual diagram showing a frame of a signal output from a coupler of FIG. 3;
FIG. 6 is a block diagram showing the transmitter according to another embodiment of the present invention;
FIG. 7 is a block diagram showing a repeater according to exemplary embodiments of the present invention;
FIG. 8 is a block diagram showing the repeater according to an exemplary embodiment of the present invention;
FIG. 9 is an exemplified block diagram showing a detector of FIG. 8;
FIG. 10 is a block diagram showing the repeater according to another embodiment or the present invention;
FIG. 11 is a flow chart of a transmitting method according to an exemplary embodiment of the present invention; and
FIG. 12 is a flow chart for explaining a repeating method according to an exemplary embodiment of the present invention.

## DETAILED DESCRIPTION OF THE PREFERRED EMBODIMENTS

Advantages and features of the present invention and methods to achieve them will be elucidated from exemplary embodiments described below in detail with reference to the accompanying drawings. However, the present invention is not limited to exemplary embodiment disclosed herein but will be implemented in various forms. The exemplary embodiments are provided by way of example only so that a person of ordinary skilled in the art can fully understand the disclosures of the present invention and the scope of the present invention. Therefore, the present invention will be defined only by the scope of the appended claims. Meanwhile, terms used in the present invention are to explain exemplary embodiments rather than limiting the present invention. In addition, 'connecting " one element to another element can be directly on the other element or be indirectly on the other element with one or more intervening elements interposed therebetween. Unless explicitly described to the contrary, a singular form includes a plural form in the present specification. "Comprises" and/or "comprising" used herein do not exclude the existence or addition of one or more other components.

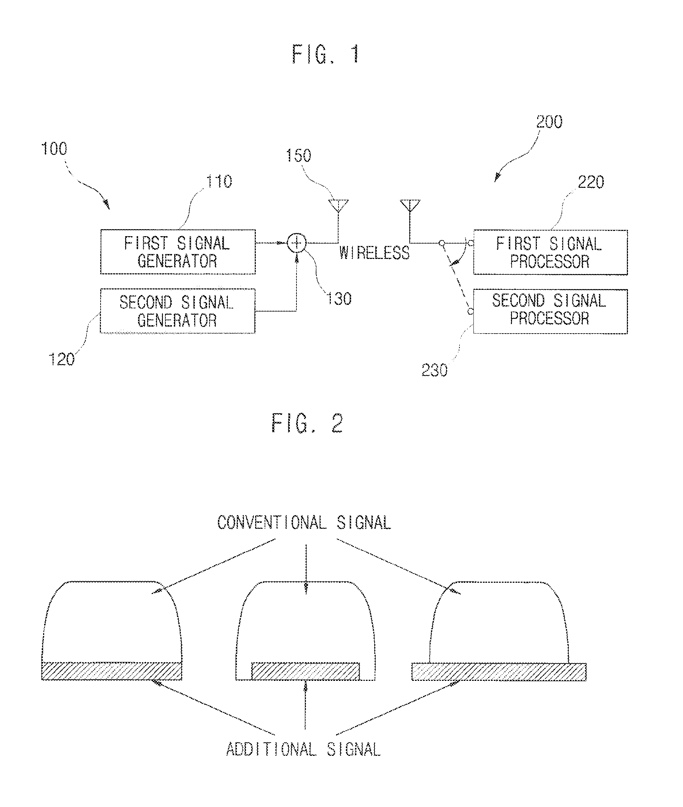

Hereinafter, a transmitter according to exemplary embodiments of the present invention will be described with reference to FIGS. 1 and 2. FIG. 1 is a block diagram showing a transmitter according to exemplary embodiments of the present invention and a receiver corresponding to the transmitter and FIG. 2 is an exemplified frequency spectrum of a signal transmitted by the transmitter of FIG. 1

As shown in FIG. 1, a transmitter 100 according to exemplary embodiments of the present invention includes a first signal generator 110, a second signal generator 120, and a coupler 130, and a transmitting unit 150.

The first signal generator 110 generates conventional signals according to a first wireless communication scheme.

The second signal generator 120 generates additional signals by a second wireless communication scheme different from a first wireless communication scheme.

The coupler 130 adds and couples the additional signals to the conventional signals and the transmitting unit 150 transmits the coupled signals.

As described above, a spectrum of a signal transmitted from the transmitter 100 is shown in FIG. 2. The additional signal used in the second wireless communication scheme is a signal that is added at a relatively smaller size than a conventional signal of the first wireless communication scheme in a radio band of the first wireless communication scheme and can be recovered by a receiver 200.

The receiver 200 receives a signal transmitted in a specific radio band by the transmitter 100 and separates the conventional signals of the first wireless communication scheme and the additional signal used in the second wireless communication scheme from the received signal. The receiver 200 may include, for example, a separator 210, a first signal processor 220, and a second signal processor 230.

Herein, the first signal processor 220 uses the additional signal processed by the second signal processor 230 to process the conventional signal of the first wireless communication scheme. For example, when the second signal processor 230 detects (or estimates) wireless channel environments transmitting the signal coupled with the additional signal, for example, a delay of a signal, a frequency error, an amplitude of a signal, etc., the first signal processor 220 can process the conventional signal of the first wireless communication scheme by using the detected results. For example, the first wireless communication scheme may be an OFDM or a multi carrier communication scheme and the second wireless communication scheme may be a CDMA or a frequency spread communication scheme. The additional signal may be a PN sequence or spread code that is used in the Wireless communication scheme, Meanwhile, the first and second wireless communication schemes are not limited thereto. The additional signal is a signal that has a relatively lower power than the conventional signal or is added without having an effect on the conventional signal and can be recovered. For example, the conventional signal of the first wireless communication scheme is a signal of a single carrier communication scheme and the additional signal can be added and recovered without having an effect on the conventional signal of the single carrier communication scheme. The second wireless communication scheme is included in the scope of the present invention. Alternatively, the second, wireless communication scheme may be any transmission scheme having a coding gain.

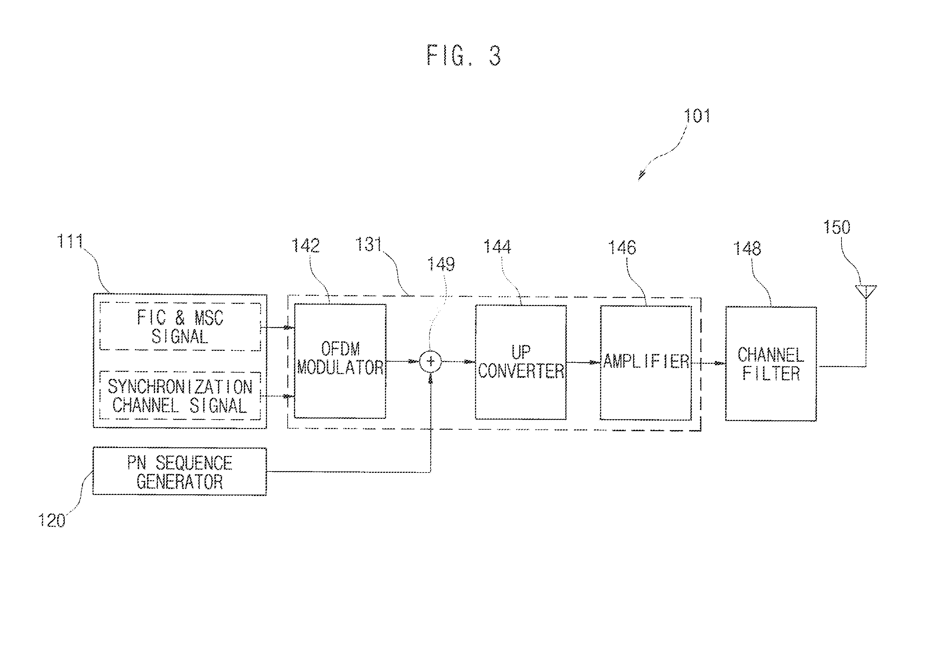

Herein, exemplary embodiments will be described in detail with reference to FIGS. 3 to 6.

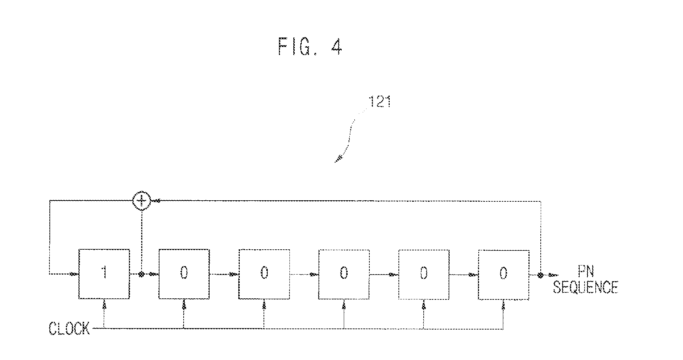

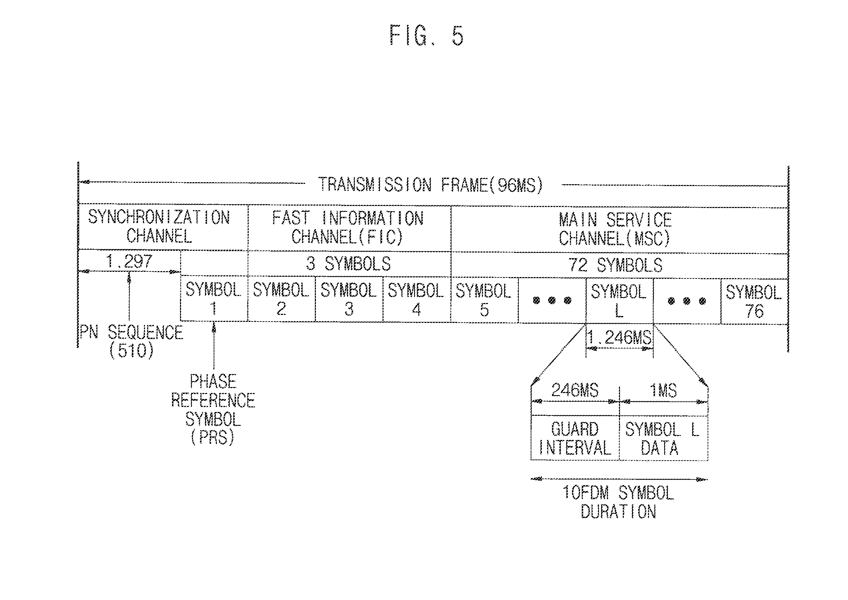

First, the exemplary embodiment of the present invention will be described with reference to FIGS. 3 to 5. FIG. 3 is a block diagram illustrating a configuration of the transmitter according to an exemplary embodiment of the present invention, FIG. 4 is an exemplified block diagram of a PN sequence generator of FIG. 3, and FIG. 5 is an exemplary conceptual diagram showing a frame of a signal output from a coupler of FIG. 3.

Referring to FIG. 3, a transmitter 101 according to an exemplary embodiment of the present invention includes a conventional signal generator 111, a PN sequence generator 121, a coupler, a channel filter 148, and an antenna 150.

The conventional signal generator generates the conventional signal of the OFDM scheme. For example, the conventional signal generating unit 111 generates a fast information channel (FIC) signal, a main service channel (MSC) signal, and a synchronization channel signal in a base band.

The PN sequence generator 121 generates a PN sequence used in the CDMA scheme in the base band. The PN sequence generator 121 may be configured as shown in FIG. 4 and may generate the PN sequence signal having period 64 (= 26) by using the following Equation 1.

[Equation 1]

$$x^6 + x + 1$$

For example, the PN sequence generator 121 may be a Gaussian pulse generating unit and the shape or the pulse may be equal to a Gaussian pulse and the following Equation 2. [Equation 2]

$$p(t) = \exp\left[ -2\pi\left( \frac{t}{\tau_p} \right)^2 \right]$$

Meanwhile, the coupler 131 couples the FIC signal, the MSC signal, and the synchronization channel signal with the PN sequence signal in the base band. The coupler 131 includes an OFDM modulator 142, an adder 149, an up converter 144, and an amplifier 146.

The OFDM modulator 142 modulates the FIC signal, the MSC signal, and the synchronization signal at the time of the OFDM modulation. The adder 149 adds the PN sequence to the modulated signal. The added signal may be one shown in FIG. 5. FIG. 5 shows an example of a case when the frame of the coupled signal has a DAB/DAB+/T-DMB frame structure by way of example, as the case when the conventional signal is a DAB (or DAB+ or T-DMB) signal of the OFDM scheme. The coupled signal includes symbol 1 to symbol 76 in the synchronization channel, the FIC, and the MSC and couples a null period of the synchronization channel to the PN sequence.

Meanwhile, the up converter 144 performs an up-frequency shift on the added signal to the OFDM radio band. The amplifier 146 amplifies the up-frequency shifted signal and transmits it to the channel filter 148. The channel filter 148 filters the coupled signal to remove noise other than a frequency band and transmits it through the antenna 150.

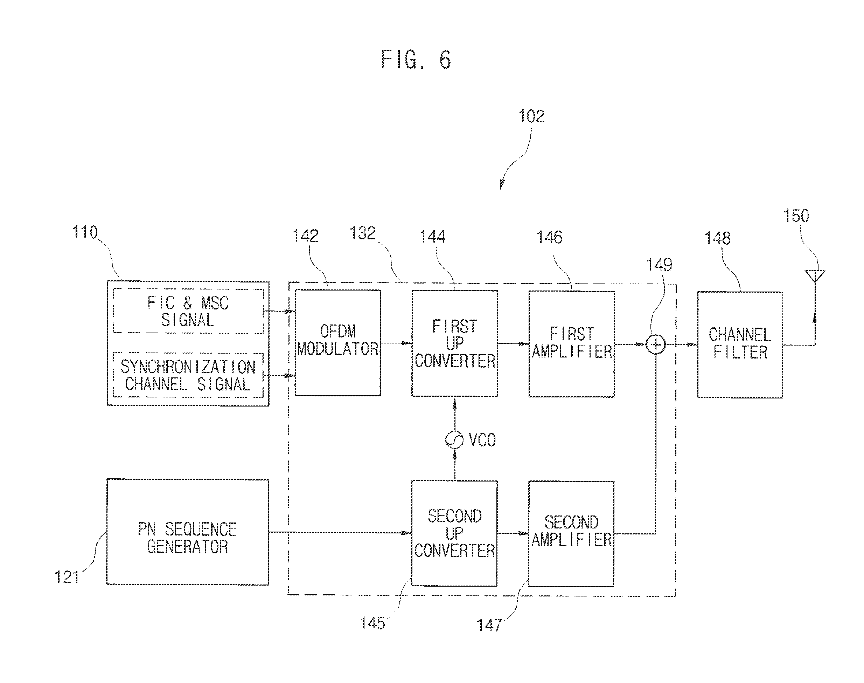

The transmitter according to another embodiment of the present invention will be described with reference to FIG. 6. FIG. 6 is a block diagram showing the transmitter according to another embodiment of the present invention. However, components of performing the same functions as components shown in FIG. 5 are denoted by the same reference numerals and therefore, the detailed description of the corresponding components will be omitted.

Referring to FIG. 6, the transmitter 102 according to the exemplary embodiment couples the FIC signal, the MSC signal, and the synchronization signal to the PN sequence in the radio band.

In detail, the coupler 132 includes an OFDM modulator 142, a first up converter 144, a first amplifier 146, a second up converter 145, a second amplifier 146, and an adder 149.

The OFDM modulator 142 inputs and modulates the FIC signal, the MSC signal, and the synchronization channel signal in the base band and the first up converter 144 performs the up-frequency shift on the modulated signal and the first amplifier 146 amplifies the up-shifted signal.

The second up converter 145 performs the up-frequency shift on the PN sequence signal and the second amplifier 147 amplifies the up-shifted signal.

The adder 149 adds the signal output from the second amplifier 147 to the signal output from the first amplifier 146 and transmits it to the channel filter 148.

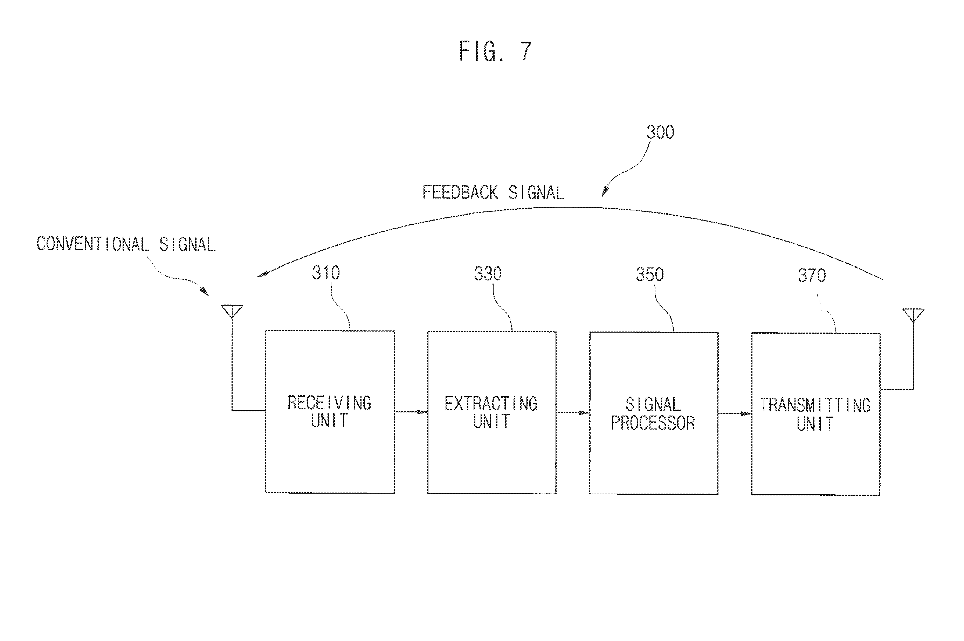

A repeater according to the exemplary embodiments of the present invention will be described with reference to FIG. 7. FIG. 7 is a block diagram showing a repeater according to exemplary embodiments of the present invention.

Referring to FIG. 7, a repeater 300 includes a receiving unit 310, an extracting unit 330, a signal processor 350, and a transmitting unit 370.

The receiving unit 310 receives the conventional signal transmitted of other wireless apparatuses, for example, a base station and a feedback signal fedback according to the repetition of the conventional signal. The conventional signal is transmitted by a first wireless communication scheme, for example, an OFDM scheme and may be an additional signal used in a second wireless communication scheme different from the first wireless communication scheme, for example, a signal to which the PN sequence signal used in the CDMA scheme is added. The feedback signal is a signal feedback according to the repetition of the conventional signal and may include the PN sequence signal,

The extracting unit 330 extracts the additional signal from the feedback signal.

The signal processor 350 uses the extracted additional signal and processes the signal received by the receiving unit 310 and repeats the processed signal through the transmitting unit 370. For example, the signal processor 350 can use the extracted additional signal to remove the feedback signal from the signal received by the receiving unit 310 and then repeat it through the transmitting unit 370. Alternatively, the signal processor 350 can use the extracted additional signal to remove (equalize) the distortion of the conventional signal of the first wireless communication scheme and repeat it through the transmitting unit 370. Alternatively, the signal processor 350 can remove and equalize the feedback signal from the signal received by the receiving unit 310 and transmit it through the transmitting unit 370.

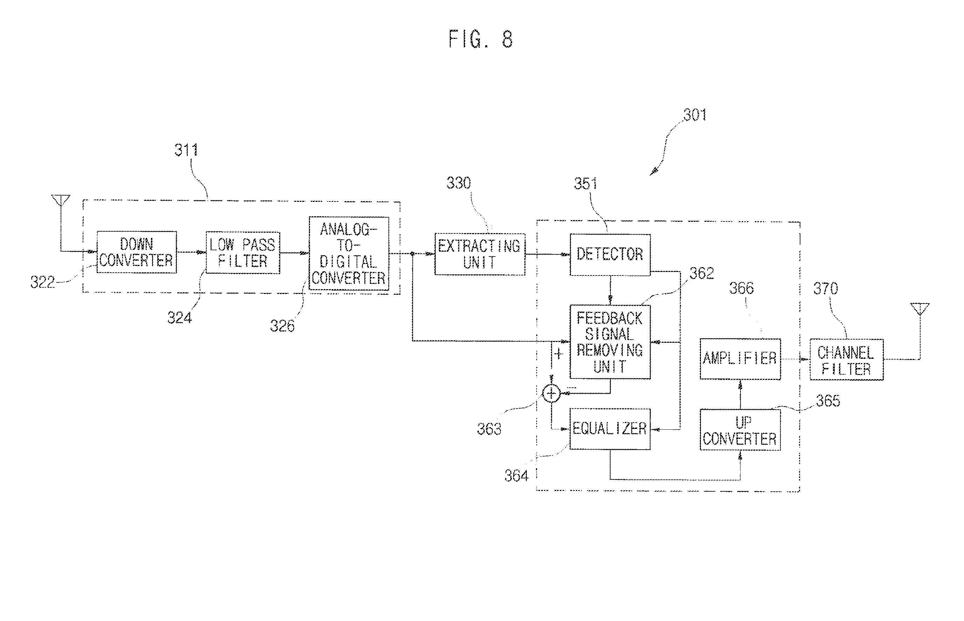

Herein, exemplary embodiments will be described in detail with reference to FIGS. 8 to 10.

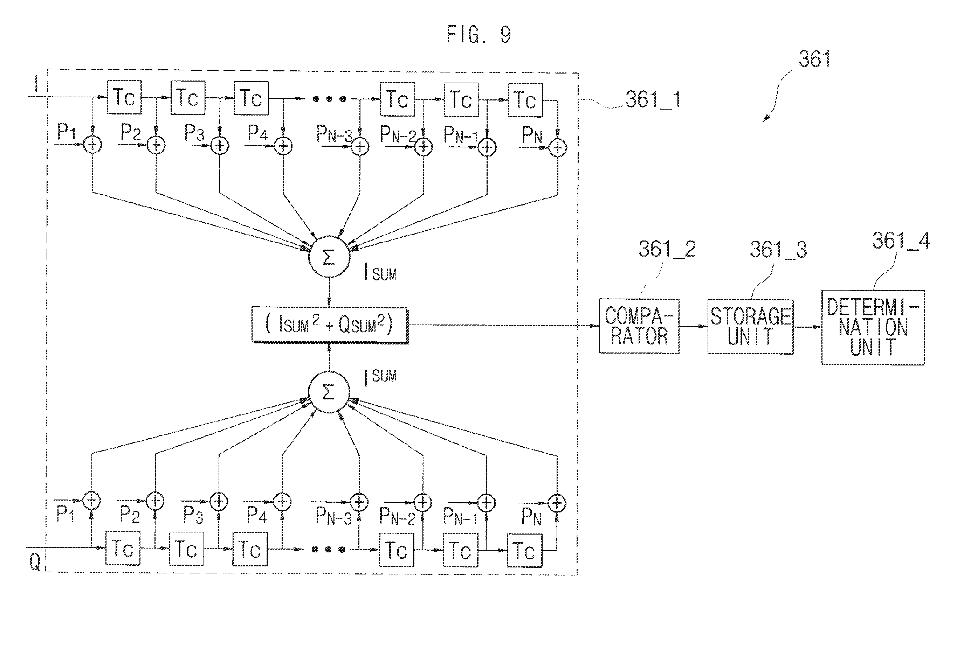

First, a repeater according to an exemplary embodiment of the present invention will be described with reference to FIGS. 8 and 9. FIG. 8 is a block diagram showing the repeater according to an exemplary embodiment of the present invention and FIG. 9 is an exemplified block diagram showing a detector of FIG. 8.

Referring to FIG. 8, a repeater 301 according to one exemplary embodiment of the present invention includes a receiving unit 311, an extracting unit 330, a signal processor 351, and a channel filter 370.

The receiving unit 311 includes a down converter 322, a low pass filter 324, and an analog to digital converter 326 and receives the conventional signal and the feedback signal transmitted through the radio band and performs down-frequency shift, low frequency filtering, and digital conversion thereon, thereby outputting the conventional signal and the feedback signal of the base band.

The extracting unit 330 extracts the additional signal, for example, the PN sequence signal from the feedback signal. For example, when the additional signal is added in the null period, the extracting unit 330 can extract the additional signal in the null period.

Alternatively, when the information on a position where the additional signal is added is included in the conventional signal (or feedback signal), the extracting unit 330 can extract the additional signal from the feedback signal based on the information.

The signal processor 350 uses the extracted additional signal to process the signal received by the receiving unit 311.

Describing in detail, the signal processor 350 may include a detector 351, a feedback signal removing unit 362, an equalizer 364, an up-converter 365, and an amplifier 366.

The detector 351 detects (or estimates) the wireless channel environment from the additional signal, for example, the PN sequence signal. The wireless channel environment may include, for example, the amplitude of the feedback signal, the frequency error, or the time delay value. The detector 351 outputs the detected results to the feedback signal removing unit 362 and the equalizer 364. The detailed description of the detector 351 will be described below with reference to FIG. 9.

The feedback signal removing unit 362 uses the detected results to remove the feedback signal from the signal received by the receiving unit 311. For example, the feedback signal removing unit 362 may use at least one of the time delay and power value of the feedback signal to remove the feedback signal from the signal received by the receiving unit 311. At this time, an adder 363 is used to remove the feedback signal from the signal received by the receiving unit 311.

The equalizer 364 uses the detected results to remove the distortion of the conventional signal received by the receiving unit 311. For example, the equalizer 364 can use at least one of the time delay and the power value of the feedback signal to remove a Doppler effect due to a multipath signal or a vehicle in a downtown.

The conventional signal from which the feedback signal is removed and the distortion is removed is up shifted through the up converter 365, amplified by the amplifier 366, and repeated through an antenna while noise is removed by the channel filter 370.

Although the case where the signal processor 350 includes both the feedback signal removing unit 362 and the equalizer 364 is described with reference to FIG. 8, any one of the feedback signal removing unit 362 and the equalizer 364 may be omitted.

The detector 351 of FIG. 8 will be described in detail with reference to FIG. 9 by way of example.

Referring to FIG. 9, the detector 351 may include a matched filter 361_1, a comparator 361_2, a storage unit 361_3, and a determination unit 361_4,

The matched filter 361_1 is configured to include, for example, 64 taps and sums outputs from the entire taps by multiplying I signals and Q signals by the PN sequence while shifting the I signals and the Q signals, respectively, in one tap unit, The matched filter squares the summing result (Isum) of the I signals and the summing result (Qsum) of the Q signals and then sums them, thereby calculating the power value at each time point.

The comparator 361_2 determines the calculated power value as candidate groups and stores it in the storage unit 361_3 if the calculated power value is larger than the predetermined threshold value.

The determination unit 361_4 detects the largest value among the candidate groups stored in the storage unit 361_3 and determines the largest value as the power value of the feedback signal and determines the time point when the largest value is detected as the delay time. Thereafter, the power value and/or the delay time of the determined feedback signal are used to remove the feedbacks signal and correct the distortion by the equalizer 364.

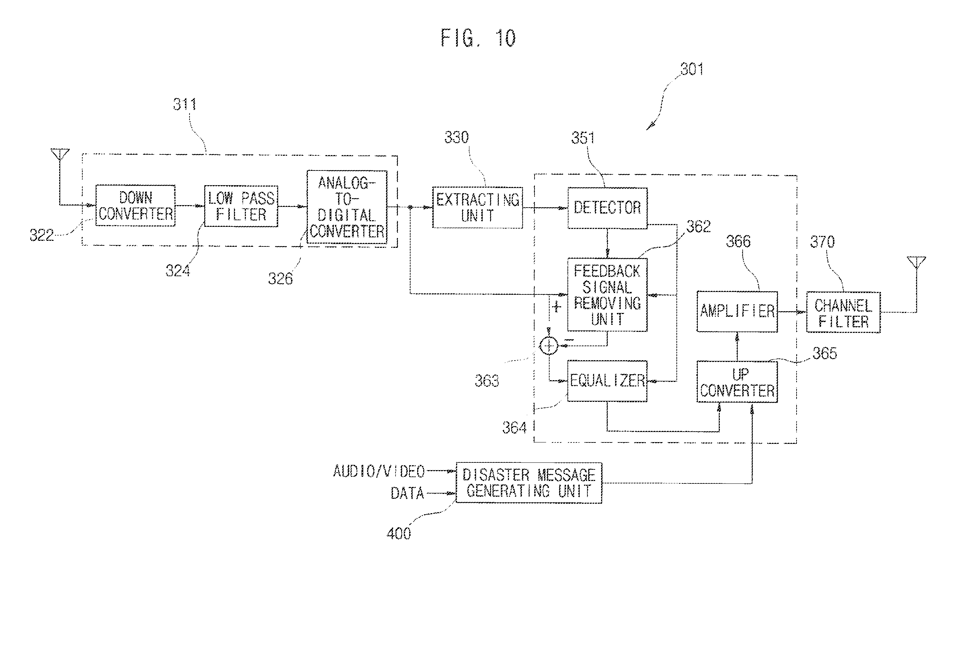

The repeater according to another embodiment of the present invention will be described with reference to FIG. 10. FIG. 10 is a block diagram showing the repeater according to another exemplary embodiment of the present invention.

The repeater 302 according to the exemplary embodiment of the present invention performs the repeating function transmitting the received conventional signal at normal times and transmits a disaster message in an emergency situation such as a disaster. The repeater 302 further includes a disaster message generating unit 400 in the repeater 301 according to the above-mentioned exemplary embodiment as shown in FIG. 10.

The disaster message generating unit 400 receives and encodes an audio signal, a video signal, and a data signal that informs the disaster generation and modulates and transmits them by the same scheme as the modulation scheme of the conventional signal.

For example, the case where the repeater 301 is the repeater 302 of a DAB (or DAB+, or T-DMB) broadcasting signal will be described.

The repeater 302 is installed in a tunnel, etc., to repeat the DAB (or DAB+, orT-DMB) broadcasting signal received from the base station at normal times. However, when an emergency situation such as the disaster generation is generated, for example, an accident is generated at the exit point of the tunnel, the repeater 302 repeats the disaster.

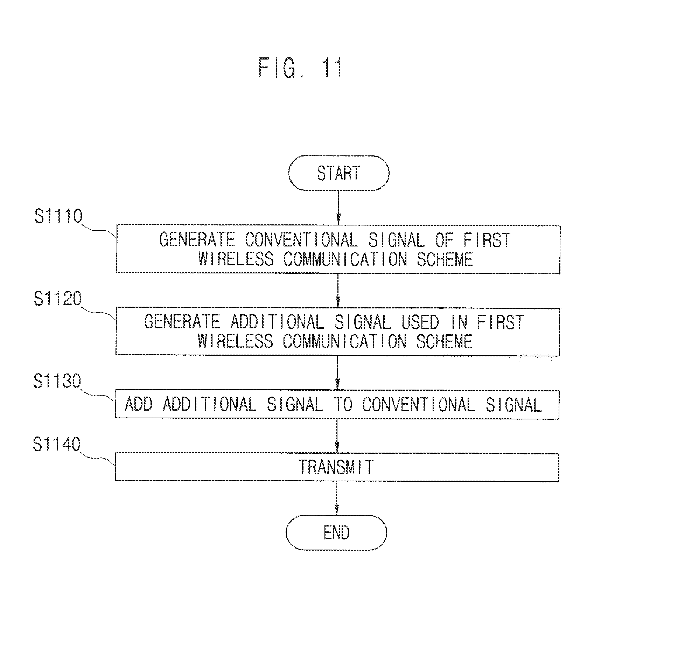

Next, the transmitting method according to the exemplary embodiment of the present invention will be described with reference to FIGS. 1 and 11, FIG. 11 is a flow chart of a transmitting method according to an exemplary embodiment of the present invention.

Referring to FIGS. 1 and 11, the first signal generator 110 generates the conventional signal of the first wireless communication scheme (S1110). For example, the first signal generator 110 generates the FIC signal, the MSC signal, and the synchronization channel signal in the OFDM scheme as shown in FIG. 3.

Next, the second signal generator 120 generates additional signals used in the second wireless communication scheme different from the first wireless communication scheme (S1120). For example, the second signal generator 120 generates the PN sequence signal used in the CDMA scheme as shown in FIG. 3.

The coupler 130 adds the additional signal to the conventional signal generated by the first signal generator 110 (S1130). For example, as shown in FIG. 5, the PN sequence is coupled with the FIC signal, the MSC signal, and the synchronization channel signal.

The transmitter 150 transmits the coupled signal through the transmission band (S1140).

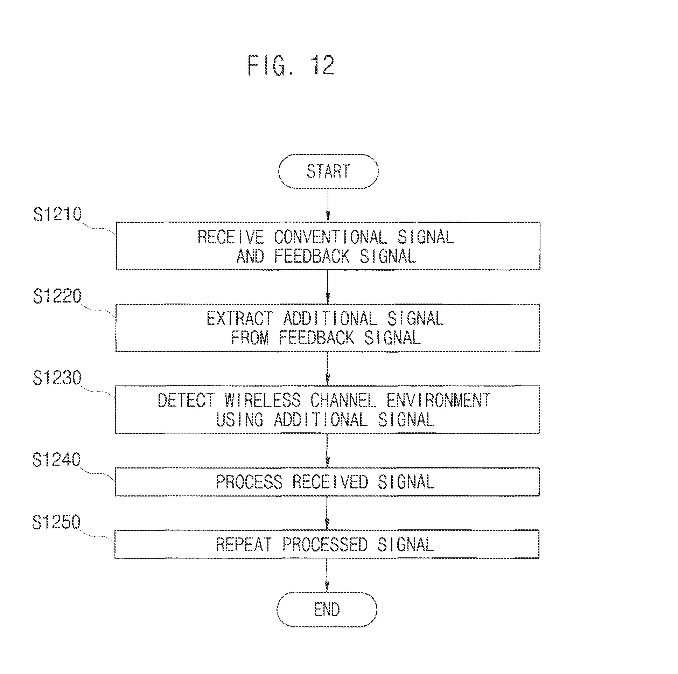

The repeating method according to the exemplary embodiment of the present invention will be described with reference to FIGS. 7 and 12. FIG. 12 is a flow chart for explaining a repeating method according to an exemplary embodiment of the present invention.

Referring to FIGS. 7 and 12, the receiving unit 310 receives the conventional signal transmitted in the first wireless communication scheme and the feedback signal fedback according to the repeating of the conventional signal (S1210).

The extracting unit 320 extracts the additional signal from the feedback signal (S1220).

The signal processor 350 uses the extracted additional signal to detect the wireless channel environment (S1230) and processes the signal received by the receiving unit 310 (S1240). For example, the signal processor 350 extracts the PN sequence signal from the feedback signal and detects the signal delay and the power value of the feedback signal by using the extracted PN sequence signal and removes the feedback signal from the signal received by the receiving unit 310 and corrects the distortion by using the detected result.

The transmitting unit 370 repeats the processed signal (S1250).

While configurations of certain embodiments have been described above with reference to the accompanying drawings, it is by way of example only. Those skilled in the art can make various modifications and changes within the technical spirit of the present invention. For example, the CDMA and OFDM described in the exemplary embodiments is not limited to the known communication scheme but means all the communication schemes included in the frequency spread communication scheme and the multi carrier communication scheme and the PN sequence is used as a term including all the spread codes to spread the frequency band. Accordingly, the actual technical protection scope of the present invention must be determined by the spirit of the appended claims.

**Claims**

1. A transmitter, comprising:

   a first signal generator that generates conventional signals according to a first wireless communication scheme;
   a second signal generator that generates additional signals used in a second wireless communication scheme different from the first wireless communication scheme;
   a coupler that couples the additional signals to the convention signals; and
   a transmitting unit that transmits the coupled signals in a transmission band of the first wireless communication scheme,

2. The transmitter according to claim 1, wherein the additional signal is used to detect wireless channel environment where the coupled signals are transmitted.

3. The transmitter according to claim 1 or 2, wherein the first wireless communication scheme is a multicarrier communication scheme and the second wireless communication scheme is a frequency spread communication scheme.

4. The transmitter according to claim 3, wherein the additional signal includes a spread code.

5. The transmitter according to one of claims 1 to 4, wherein the coupler includes:

   a modulator that modulates the conventional signals in a base band according to the first wireless communication scheme;
   an adder that couples the additional signals to the modulated signals;
   an up converter that up-shifts the added signals to the transmission band of the first wireless communication scheme; and
   an amplifier that amplifies the up-shifted signals.

6. The transmitter according to one of claims 1 to 4, wherein the coupler includes:

   a modulator that modulates the first conventional signal in a base band according to the first wireless communication scheme;
   a first up converter that up-shifts the modulated signals to the transmission band of the first wireless communication scheme;
   a first amplifier that amplifies the first up-frequency shifted signal;
   a second up converter that up-shifts the additional signal to the transmission band of the first wireless communication scheme;
   a second amplifier that amplifies the second up-frequency shifted signals; and
   an adder that adds signals output from the second amplification to signals output from the first amplification.

7. The transmitter according to one of claims 1 to 6, wherein the coupler adds the additional signals in a null period of the conventional signal.

8. A repeater repeating conventional signals transmitted by a first wireless communication scheme, comprising:

   a receiving unit that receives the conventional signals and feedback signals feedback according to the repetition of the conventional signals;
   an extractor that extracts additional signals used in a second wireless communication scheme different from the first wireless communication scheme from the feedback signals;
   a signal processor that processes signals received by the receiving unit by using the additional signals; and

a transmitting unit that repeats the processed signals.

9. The repeater according to claim 8, wherein the signal processor detects the wireless channel environment where the conventional signals are repeated by using the additional signals and removes the feedback signal from the signal received by the receiving unit using the detected result.

10. The repeater according to claim 9, wherein the signal processor includes;

a detector that detects at least one of the time delay and the power value of the feedback signal by using the additional signals; and
a feedback signal removing unit that removes the feedback signal from the signal received by the receiving unit by using the detected result.

11. The repeater according to claim 8, 9 or 10, wherein the signal processor detects the wireless channel environment where the conventional signal is repeated by using the additional signal and removes the distortion of the conventional signal by using the detected result.

12. The repeater according to claim 11, wherein the signal processor includes:

a detector that detects at least one of the time delay and the power value of the feedback signal by using the additional signals; and
an equalizer that removes the distortion of the conventional signal by using the detected result.

13. The repeater according to one of claims 8 to 12, wherein the first wireless communication scheme is a multi carrier communication scheme and the second wireless communication scheme is a frequency spread communication scheme.

14. The repeater according to claim 13, wherein the additional signal includes a spread code.

15. The repeater according to one of claims 8 to 14, wherein the signal processor includes:

a matched filter that calculates a power value by multiplying the spread code in the feedback signal by the pre-stored spread code;
a comparator that selects candidates having the calculated power value larger than a threshold value; and
a determination unit that detects the candidates having the largest power value among the selected candidates, whereby the wireless channel environment where the conventional signal is repeated from the time point when the largest candidates are detected and the power value is detected,

16. A transmitting method, comprising:

generating conventional signals according to a first wireless communication scheme;
generating additional signals used in a second wireless communication scheme different from the first wireless communication scheme;
coupling the additional signals to the conventional signals; and
transmitting the coupled signal in the transmission band of the first wireless communication scheme,
wherein the additional signal is used to detect wireless channel environments transmitting the coupled signals.

17. The transmitting method according to claim 16, wherein the first wireless communication scheme is a multi carrier communication scheme and the second wireless communication scheme is a frequency spread communication scheme and the addiational signal is a PN sequence.

18. A repeating method repeating conventional signals transmitted by a first wireless communication scheme, comprising:

receiving conventional signals and feedback signals fedback according to the repetition of the conventional signals;
extracting additional signals used in a second wireless communication scheme different from the first wireless communication scheme from the feedback signals;

detecting wireless channel environments repeating the conventional signals by using the additional signals and processing signals received by the receiving unit by using the detected result; and
repeating the processed signals.

**19.** The repeating method according to claim 18, wherein the processing includes:

detecting at least one of the time delay and the power value of the feedback signal by using the additional signals;
removing the feedback signal from the signal received by the receiving unit by using the detected result; and
removing the distortion of the conventional signal by using the detected result.

**20.** The repeating method according to claim 18, wherein the first wireless communication scheme is a multi carrier communication scheme and the second wireless communication scheme is a frequency spread communication scheme and the addiational signal is a spread code.

FIG. 1

FIRST SIGNAL
GENERATOR

SECOND SIGNAL
GENERATOR

WIRELESS

FIRST SIGNAL
PROCESSOR

SECOND SIGNAL
PROCESSOR

FIG. 2

CONVENTIONAL SIGNAL

ADDITIONAL SIGNAL

FIG. 3

101

111 — FIC & MSC SIGNAL / SYNCHRONIZATION CHANNEL SIGNAL

120 — PN SEQUENCE GENERATOR

142  131

149

OFDM MODULATOR

144 — UP CONVERTER

146 — AMPLIFIER

148 — CHANNEL FILTER

150

FIG. 4

121

CLOCK

| 1 | 0 | 0 | 0 | 0 | 0 |

PN
SEQUENCE

# FIG. 5

TRANSMISSION FRAME(96MS)

| SYNCHRONIZATION CHANNEL | FAST INFORMATION CHANNEL(FIC) | MAIN SERVICE CHANNEL(MSC) |

| 1.297 | 3 SYMBOLS | 72 SYMBOLS |

| | SYMBOL 1 | SYMBOL 2 | SYMBOL 3 | SYMBOL 4 | SYMBOL 5 | ●●● | SYMBOL L | ●●● | SYMBOL 76 |

PN SEQUENCE (510)

PHASE REFERENCE SYMBOL (PRS)

1.246MS

246MS   1MS

| GUARD INTERVAL | SYMBOL L DATA |

10FDM SYMBOL DURATION

EP 2 337 237 A1

FIG. 6

EP 2 337 237 A1

FIG. 7

300

FEEDBACK SIGNAL

CONVENTIONAL SIGNAL

310      330      350      370

| RECEIVING UNIT | EXTRACTING UNIT | SIGNAL PROCESSOR | TRANSMITTING UNIT |

EP 2 337 237 A1

FIG. 8

FIG. 9

# FIG. 10

FIG. 11

START

S1110 — GENERATE CONVENTIONAL SIGNAL OF FIRST WIRELESS COMMUNICATION SCHEME

S1120 — GENERATE ADDITIONAL SIGNAL USED IN FIRST WIRELESS COMMUNICATION SCHEME

S1130 — ADD ADDITIONAL SIGNAL TO CONVENTIONAL SIGNAL

S1140 — TRANSMIT

END

FIG. 12

```
                         ( START )
                             |
                             v
S1210 ┌──────────────────────────────────────┐
      │    RECEIVE CONVENTIONAL SIGNAL        │
      │        AND FEEDBACK SIGNAL            │
      └──────────────────────────────────────┘
                             |
                             v
S1220 ┌──────────────────────────────────────┐
      │      EXTRACT ADDITIONAL SIGNAL        │
      │        FROM FEEDBACK SIGNAL           │
      └──────────────────────────────────────┘
                             |
                             v
S1230 ┌──────────────────────────────────────┐
      │  DETECT WIRELESS CHANNEL ENVIRONMENT  │
      │        USING ADDITIONAL SIGNAL        │
      └──────────────────────────────────────┘
                             |
                             v
S1240 ┌──────────────────────────────────────┐
      │         PROCESS RECEIVED SIGNAL       │
      └──────────────────────────────────────┘
                             |
                             v
S1250 ┌──────────────────────────────────────┐
      │         REPEAT PROCESSED SIGNAL       │
      └──────────────────────────────────────┘
                             |
                             v
                         (  END  )
```

Europäisches
Patentamt

European
Patent Office

Office européen
des brevets

**EUROPEAN SEARCH REPORT**

Application Number

EP 10 19 4595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 566 900 A2 (NTT DOCOMO INC [JP]) 24 August 2005 (2005-08-24) | 1,8,16, 18 | INV. H04B7/155 |
| Y | * column 6 - column 11; figure 2 * | 2-7, 9-15,17, 19,20 | |
| X | WO 01/82499 A2 (LEE JHONG S [US]) 1 November 2001 (2001-11-01) | 1,8,16, 18 | |
| Y | * page 9 - page 10; figure 7 * | 2-7, 9-15,17, 19,20 | |
| Y | US 2002/039383 A1 (ZHU JUNJIE [SG] ET AL) 4 April 2002 (2002-04-04) * page 1; figure 2 * | 2-7, 9-15,17, 19,20 | |

TECHNICAL FIELDS
SEARCHED      (IPC)

H04B

The present search report has been drawn up for all claims

| Place of search | Date of completion of the search | Examiner |
|---|---|---|
| Munich | 25 March 2011 | Bohnhoff, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 19 4595

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2011

| Patent document cited in search report | | Publication date | Patent family member(s) | | Publication date |
|---|---|---|---|---|---|
| EP 1566900 | A2 | 24-08-2005 | CN | 1658532 A | 24-08-2005 |
| | | | JP | 4398752 B2 | 13-01-2010 |
| | | | JP | 2005236626 A | 02-09-2005 |
| | | | KR | 20060042106 A | 12-05-2006 |
| | | | US | 2005190822 A1 | 01-09-2005 |
| WO 0182499 | A2 | 01-11-2001 | AU | 4583201 A | 07-11-2001 |
| | | | KR | 20010098343 A | 08-11-2001 |
| | | | KR | 20010098344 A | 08-11-2001 |
| | | | US | 6385435 B1 | 07-05-2002 |
| US 2002039383 | A1 | 04-04-2002 | SG | 99310 A1 | 27-10-2003 |

For more details about this annex : see Official Journal of the European Patent Office, No. 12/82